# EUROPÄISCHE PATENTSCHRIFT

(11) **EP 3 710 630 B1**
(45) Veröffentlichungstag und Bekanntmachung des Hinweises auf die Patenterteilung: **17.01.2024**
(21) Anmeldenummer: 18752461.6
(22) Anmeldetag: 07.08.2018
(51) Int. Cl.: D06M 15/693, F16G 1/10

(54) **VERFAHREN ZUM ANHAFTEN EINES TEXTILMATERIALS AN EINEM ELASTOMER**
PROCESS FOR BONDING A TEXTILE MATERIAL TO AN ELASTOMER
PROCÉDÉ POUR FAIRE ADHÉRER UNE MATIÈRE TEXTILE SUR UN ÉLASTOMÈRE

(30) Priorität: 16.11.2017 DE 102017220469
(43) Veröffentlichungstag der Anmeldung: 23.09.2020
(73) Patentinhaber: ContiTech Antriebssysteme GmbH, 30165 Hannover (DE)
(72) Erfinder: TEVES, Reinhard, 30419 Hannover (DE); WELL, Michael, 30419 Hannover (DE)
(74) Vertreter: Continental Corporation
(86) Internationale Anmeldenummer: PCT/EP2018/071344
(87) Internationale Veröffentlichungsnummer: WO 2019/096456

(56) Entgegenhaltungen:
- EP-A1- 1 783 396
- WO-A1-2011/029710

## Beschreibung

Die vorliegende Erfindung betrifft ein Verfahren zum Anhaften eines Textilmaterials an einem Elastomer, wobei das Verfahren die Schritte des Vorbehandelns des Textilmaterials mit zumindest einem Mehrfachester einer α-β-ungesättigten Carbonsäure, des Inkontaktbringens des vorbehandelten Textilmaterials mit einem unvulkanisierten Elastomer, und des Vulkanisierens des erhaltenen Produktes umfasst. Weiterhin umfasst die vorliegende Erfindung einen durch dieses Verfahren erhältlichen Elastomerartikel sowie die Verwendung eines Mehrfachesters einer α-β-ungesättigten Carbonsäure zur Verbesserung der Anhaftung eines Textilmaterials an einem Elastomer.

Für die Bewehrung bzw. Verstärkung von technischen Elastomerartikeln, wie beispielsweise Förderbändern, Keilriemen, Schläuchen oder Kfz-Reifen werden je nach Beanspruchung Festigkeitsträger als tragendes Element und/oder zur Stabilisierung der Formbeständigkeit verwendet. In der Praxis werden häufig verschiedene Textilmaterialien als Festigkeitsträger eingesetzt. Zur Verbindung mit dem Elastomer werden Adhäsions- bzw. Haftsysteme angewendet, die einer statischen und dynamischen Dauerbelastung des Verbundsystems standhalten.

Traditionell werden Anhaftungen von Textilmaterialien an Elastomere durch den Einsatz von Resorcin-Formaldehyd-Latex (RFL) erreicht. Im sogenannten Tauchbadverfahren wird das Textilmaterial mit einer wässerigen RFL-Imprägnierlösung vorbehandelt, dann mit dem Elastomer verbunden und schließlich bei Temperaturen von mindestens 150°C getrocknet bzw. eingebrannt (vgl. beispielsweise Werner Kleemann, "Mischungen für die Elastverarbeitung", VEB Deutscher Verlag für Grundstoffindustrie, Leipzig 1982, Seiten 296-309).

Dieses herkömmliche Verfahren hat allerdings den Nachteil, dass der Einbrennvorgang sehr energieintensiv ist. Außerdem ist das im Resorcin-Formaldehyd-Latex enthaltene Formaldehyd im Hinblick auf die Industriehygiene nachteilig. Formaldehyd im Anhang VI der Verordnung 2008/1272/EG über die Einstufung, Kennzeichnung und Verpackung von Stoffen und Gemischen in der Kategorie 1B ("wahrscheinlich karzinogen beim Menschen") eingestuft. Daher sollte die Verwendung von Formaldehyd möglichst vermieden werden.

Der vorliegenden Erfindung liegt somit die Aufgabe zugrunde, ein Verfahren zum Anhaften eines Textilmaterials an einem Elastomer bereitzustellen, welches die vorstehend dargestellten Nachteile und insbesondere die Verwendung von RFL vermeidet.

Diese Aufgabe wird durch die in den Ansprüchen gekennzeichneten Ausführungsformen gelöst.

Insbesondere wird ein Verfahren zum Anhaften eines Textilmaterials an einem Elastomer bereitgestellt, wobei das Verfahren die Schritte umfasst:
a) das Vorbehandeln des Textilmaterials mit zumindest einem Mehrfachester einer α-β-ungesättigten Carbonsäure,
b) das Inkontaktbringen des vorbehandelten Textilmaterials mit einem unvulkanisierten Elastomer, und
c) das Vulkanisieren des erhaltenen Produktes.

Das für das erfindungsgemäße Verfahren verwendbare Textilmaterial kann jedwedes geeignete Textilmaterial sein. Vorzugsweise wird das Textilmaterial aus der Gruppe, bestehend aus Fasern, Fäden, Flächentextilien und Kombinationen davon, ausgewählt.

Im Rahmen der vorliegenden Erfindung wird unter einer Faser ein dünnes, längliches Gebilde verstanden, welches ein Verhältnis von Länge zu Durchmesser von mindestens 10:1 aufweist. Eine Faser kann endlos oder längenbegrenzt sein. Als Endlosfaser (auch als Filament bezeichnet) wird eine Faser mit einer Länge von mindestens 1000 m bezeichnet. Als längenbegrenzte Faser wird sowohl eine Langfaser, welche eine Länge von mindestens 10 cm aufweist, als auch eine Kurzfaser, welche eine Länge von höchstens 10 cm aufweist, bezeichnet. Erfindungsgemäß werden vorzugsweise Kurzfasern mit einer Länge im Bereich von etwa 1 bis 10 cm, besonders bevorzugt im Bereich von etwa 4 bis 8 cm verwendet.

Die für das erfindungsgemäße Verfahren verwendbaren Fasern können Naturfasern oder Chemiefasern sein. Geeignete Naturfasern stellen Pflanzenfasern (wie beispielsweise Baumwollfasern (CO), Sisalfasern, Hanffasern, Leinenfasern), tierische Fasern (wie beispielsweise Seide, Kaschmir, Rosshaar) und Mineralfasern (wie beispielsweise Asbest, Fasergips, Wollastonit) dar. Geeignete Chemiefasern stellen Fasern aus natürlichen Polymeren (beispielsweise Viskose (CV), Acetat (CA), Triacetat (CTA)), Fasern aus synthetischen Polymeren (beispielsweise Polyester (PES), Polyamid (PA), Aramid (AR)) und Fasern aus anorganischen Stoffen (beispielsweise Keramikfasern, Glasfasern (GF), Kohlenstofffasern (CF)) dar. In einer bevorzugten Ausführungsform der vorliegenden Erfindung werden Fasern aus synthetischem Polymer, ausgewählt aus der Gruppe, bestehend aus Polyester (PES) (insbesondere Polyethylenterephthalat (PET), Polytrimethylenterephthalat (PTT), Polybutylenterephthalat (PBT)), Polyamid (PA) (insbesondere PA6.6, PA12, PA6), Polyimid (PI), Polyamidimid (PAI), Aramid (AR), Polyacryl (PAN), Polytetrafluorethylen (PTFE), Polyethylen (PE) (insbesondere UHMWPE), Polypropylen (PP), Polyurethan (PU), Polybenzimidazol (PBI), Melamin (MEL), Polyvinylalkohol (PVA), Polycarbonat (PC), Polystyrol (PS), Polybenzoxazol (PBO), Polyphenylensulfid (PPS), Polyetheretherketon (PEEK) und Kombinationen davon, verwendet. In einer anderen bevorzugten Ausführungsform werden Fasern aus anorganischen Stoffen, ausgewählt aus der Gruppe, bestehend aus Keramik, Quarz, Glas, Basalt, Kohlenstoff und Kombinationen davon, verwendet. Erfindungsgemäß besonders bevorzugte Fasern sind Viskosefasern (CV), Polyesterfasern (PES) (insbesondere Polyethylenterephthalatfasern (PET)), Polyamidfasern (PA) (insbesondere Fasern aus PA6.6, PA12 oder PA 6), Aramidfasern (AR) (insbesondere Aramidkurzfasern), Polyurethanfasern (PU), Glasfasern (GF), Kohlenstofffasern (CS) und Kombinationen davon.

Im Rahmen der vorliegenden Erfindung wird unter einem Faden ein Verbund aus mehreren Fasern mit einer dominierenden eindimensionalen Erstreckung verstanden. Erfindungsgemäß besteht der Faden vorzugsweise aus den vorstehend genannten Fasern oder Kombinationen davon. Erfindungsgemäß besonders bevorzugt ist ein Faden aus Viskosefasern (CV), Polyesterfasern (PES) (insbesondere Polyethylenterephthalatfasern (PET)), Polyamidfasern (PA) (insbesondere Fasern aus PA6.6, PA12 oder PA6), Aramidfasern (AR), Polyurethanfasern (PU), Glasfasern (GF), Kohlenstofffasern (CS) und Kombinationen davon. Eine besonders bevorzugte Kombination stellt ein Faden aus Baumwollfasern (CO) und Polyesterfasern (PES) dar.

Weiterhin kann das Textilmaterial erfindungsgemäß auch ein Flächentextil sein. Unter einem Flächentextil wird erfindungsgemäß ein Textilmaterial verstanden, welches in Abgrenzung zu einer Faser oder einem Faden keine im Wesentlichen eindimensionale Erstreckung, sondern eine zweidimensionale Erstreckung aufweist und somit eine Fläche ausbildet. Vorzugsweise werden die Flächentextilien aus der Gruppe, bestehend aus Geweben, Gewirken, Gestricken, Nonwovens und Kombinationen davon, ausgewählt. Im Rahmen der vorliegenden Erfindung schließt der Begriff Nonwovens sowohl Vliese als auch Filze ein. Die im erfindungsgemäßen Verfahren verwendbaren Flächentextilen können aus jedweden geeigneten Fasern oder Fäden hergestellt sein. Vorzugsweise sind diese aus den vorstehend beschriebenen Fasern und Fäden hergestellt.

Das erfindungsgemäße Textilmaterial umfasst somit vorzugsweise eines der vorstehend in Bezug auf die Fasern genannten Materialien. Insbesondere umfasst das erfindungsgemäße Textilmaterial Baumwolle (CO), Sisal, Hanf, Leinen, Seide, Kaschmir, Rosshaar, Fasergips, Wollastonit, Viskose (CV), Acetat (CA), Triacetat (CTA), Polyester (PES) (insbesondere Polyethylenterephthalat (PET), Polytrimethylenterephthalat (PTT), Polybutylenterephthalat (PBT)), Polyamid (PA) (insbesondere PA6.6, PA12, PA6), Polyimid (PI), Polyamidimid (PAI), Aramid (AR), Polyacryl (PAN), Polytetrafluorethylen (PTFE), Polyethylen (PE) (insbesondere UHMWPE), Polypropylen (PP), Polyurethan (PU), Polybenzimidazol (PBI), Melamin (MEL), Polyvinylalkohol (PVA), Polycarbonat (PC), Polystyrol (PS), Polybenzoxazol (PBO), Polyphenylensulfid (PPS), Polyetheretherketon (PEEK), Keramik, Quarz, Glas, Basalt, Kohlenstoff und Kombinationen davon. Besonders bevorzugt umfasst das im erfindungsgemäßen Verfahren verwendete Textilmaterial Viskose (CV), Polyester (PES) (insbesondere Polyethylenterephthalat (PET)), Polyamid (PA) (insbesondere PA6.6, PA12, PA6), Aramid (AR), Polyurethan (PU), Glas (GF), Kohlenstoff (CS) und Kombinationen davon.

Besonders bevorzugt ist die erfindungsgemäße Verwendung eines Textilmaterials, ausgewählt aus Polyestergewebe, Polyamidgewebe, Polyesterfaden, Aramidfaden, Aramidfasern, Glasfasern, Kohlefasern, Viskosefasern und Kombinationen davon. Als Aramidfasern werden vorzugsweise Aramidkurzfasern eingesetzt.

Das erfindungsgemäße Verfahren dient dem Anhaften eines Textilmaterials an einem Elastomer. Unter einem Elastomer werden formfeste, aber elastisch verformbare Kunststoffe verstanden, deren Glasübergangspunkt sich unterhalb der Raum- bzw. Einsatztemperatur befindet. Für das erfindungsgemäße Verfahren können jedwede geeignete Elastomere verwendet werden. Vorzugsweise wird für das erfindungsgemäße Verfahren ein Elastomer verwendet, welches eine Kautschukkomponente ist, ausgewählt aus der Gruppe, bestehend aus einem Ethylen-Propylen-Mischpolymerisat (EPM), einem Ethylen-Propylen-Dien-Mischpolymerisat (EPDM), einem (teil)hydrierten Nitrilkautschuk (HNBR), einem Chloropren-Kautschuk (CR), einem Fluor-Kautschuk (FKM), einem Naturkautschuk (NR), einem Styrol-Butadien-Kautschuk (SBR), einem Butadien-Kautschuk (BR) und Kombinationen davon. Besonders bevorzugt werden als Elastomere peroxidisch vernetzte bzw. vernetzende Kautschuke oder Mischpolymerisate verwendet.

In Schritt a) des erfindungsgemäßen Verfahrens wird das Textilmaterials mit zumindest einem Mehrfachester einer α-β-ungesättigten Carbonsäure vorbehandelt. Dieser Ester ist der Mehrfachester eines Polyols mit einer α-β-ungesättigten Carbonsäure. Beispiele geeigneter Polyole sind Ethan-1,2-diol (Ethylenglykol), 1,1,1-Trimethylolpropan, 1,3-Propandiol, 1,4-Butandiol, 1,5-Pentandiol, 1,6-Hexandiol, 3-Methylpentan-1,5-diol, 1,7-Heptandiol, 1,8-Octandiol, 1,9-Nonandiol, 1,10-Decandiol, 1,12-Dodecandiol, Oligomere des 1,6-Hexandiols, des Ethylen- und Propylenglykols wie beispielsweise Diethylenglykol, Triethylenglykol, Tetraethylenglykol, Dipropylenglykol oder Tetrapropylenglykol. Geeignete α-β-ungesättigten Carbonsäuren sind insbesondere α-β-ungesättigten C₃₋₁₀-Carbonsäuren, beispielsweise Acrylsäure oder Methacrylsäure. Bevorzugt sind Di- und Triacrylate oder Di- und Trimethacrylate von mehrwertigen Alkoholen. Gemäß einer besonders bevorzugten Ausführungsform der vorliegenden Erfindung wird der zumindest eine Mehrfachester einer α-β-ungesättigten Carbonsäure aus der Gruppe, bestehend aus Trimethylolpropantrimethacrylat, Trimethylolpropantriacrylat und Kombinationen davon, ausgewählt. In einer bevorzugten Ausführungsform wird nur ein Mehrfachester, also kein Gemisch aus zwei oder mehreren Mehrfachestern, verwendet.

Das Vorbehandeln des Textilmaterials mit dem Mehrfachester einer α-β-ungesättigten Carbonsäure kann durch jedwedes geeignete Verfahren erfolgten, beispielsweise durch Imprägnieren, Eintauchen oder Aufsprühen.

In Schritt b) des erfindungsgemäßen Verfahrens wird das vorbehandelte Textilmaterial mit einem unvulkanisierten Elastomer in Kontakt gebracht. Die entsprechenden Elastomere wurden vorstehend bereits beschrieben. Vorzugsweise wird für das erfindungsgemäße Verfahren ein Elastomer verwendet, welches eine Kautschukkomponente ist, ausgewählt aus der Gruppe, bestehend aus einem Ethylen-Propylen-Mischpolymerisat (EPM), einem Ethylen-Propylen-Dien-Mischpolymerisat (EPDM), einem (teil)hydrierten Nitrilkautschuk (HNBR), einem Chloropren-Kautschuk (CR), einem Fluor-Kautschuk (FKM), einem Naturkautschuk (NR), einem Styrol-Butadien-Kautschuk (SBR), einem Butadien-Kautschuk (BR) und Kombinationen davon. Besonders bevorzugt werden als Elastomere peroxidisch vernetzte bzw. vernetzende Kautschuke oder Mischpolymerisate verwendet.

Das Inkontaktbringen kann ebenfalls auf jedwede geeignete Weise erfolgen. In einer bevorzugten Ausführungsform der vorliegenden Erfindung wird das vorbehandelte Textilmaterial auf das Elastomer aufgebracht bzw. aneinander gebracht. Dieses Verfahren ist insbesondere vorteilhaft für Textilmaterialien, die in Form von Flächentextilien vorliegen.

In einer anderen bevorzugten Ausführungsform wird das mit zumindest einem Mehrfachester einer α-β-ungesättigten Carbonsäure vorbehandelte Textilmaterial vor dem Inkontaktbringen mit dem unvulkanisierten Elastomer in kleinere Teile bzw. Fragmente zerlegt und das anschließende Inkontaktbringen erfolgt mit dem unvulkanisierten Elastomer durch Einmischen in das unvulkanisierte Elastomer. Dieses Verfahren ist insbesondere vorteilhaft für Textilmaterialien, die in Form von Fasern oder Fäden vorliegen. Für diese Anwendung ist es insbesondere vorteilhaft, wenn das Textilmaterial Aramidkurzfaser ist, der zumindest eine Mehrfachester einer α-β-ungesättigten Carbonsäure Trimethylolpropantrimethacrylat ist und das Elastomer Ethylen-Propylen-Dien-Mischpolymerisat (EPDM) oder ein (teil)hydrierter Nitrilkautschuk (HNBR) ist.

In Schritt c) des erfindungsgemäßen Verfahrens wird das in Schritt b) erhaltene Produkt vulkanisiert. Der Schritt des Vulkanisierens kann in üblicher Weise erfolgen.

Mit dem erfindungsgemäßen Verfahren ist es möglich, eine verbesserte Haftung zwischen Elastomer und Textilmaterial nach dem Vulkanisieren im Vergleich zur Verwendung eines unbehandelten Textilmaterials zu erreichen. Durch das erfindungsgemäße Verfahren ist es weiterhin im Gegensatz zu den herkömmlichen Verfahren möglich, auf den Einsatz von RFL zu verzichten, was aus gesundheitlichen Gründen und Umweltaspekten vorteilhaft ist. Darüber hinaus kann auf den Schritt des Einbrennens verzichtet werden, welcher bei der RFL-Behandlung notwendig ist.

Die vorliegende Erfindung betrifft ferner einen Elastomerartikel, der durch das erfindungsgemäße Verfahren erhältlich ist. Dieser Elastomerartikel liegt vorzugsweise in der Form eines Bandes, Gurtes, Riemens, Schlauches, Luftfederbalgs, Kompensators oder einer mehrschichtigen Stoffbahn vor. Besonders bevorzugt liegt der Elastomerartikel in der Form eines Antriebsriemens vor, wobei das Elastomer einen Grundkörper bildet, der eine Decklage als Riemenrücken und einen Unterbau mit einer Kraftübertragungszone umfasst, wobei die Decklage und/oder die Kraftübertragungszone mit der Textilmaterial versehen ist/sind. Der Antriebsriemen ist vorzugsweise als Flachriemen, Keilriemen, Keilrippenriemen, Zahnriemen, Kupplungsriemen oder Aufzugsriemen ausgebildet.

Weiterhin betrifft die vorliegende Erfindung die Verwendung eines Mehrfachesters einer α-β-ungesättigten Carbonsäure zur Verbesserung der Anhaftung eines Textilmaterials an einem Elastomer.

Die Erfindung wird nunmehr anhand von Beispielen näher erläutert.

### Beispiele:

### Beispiel 1:

Polyestergewebe wird in reines Trimethylolpropantrimethacrylat (CAS 3290-92-4) getaucht, vom überschüssigen Beschichtungsmaterial grob gereinigt und auf eine unvulkanisierte Gummiplatte aus einer Mischung auf Basis einer peroxidvernetzenden HNBR-Kautschukmischung gelegt. Das Gebilde wird 20 Minuten bei 180°C unter Druck vulkanisiert. Es ergeben sich folgende Trennkräfte (bestimmt nach DIN 53530) für das durch das erfindungsgemäße Verfahren erhaltene Produkt sowie für entsprechende Vergleichsprodukte mit RFL-Behandlung bzw. ohne Behandlung des Polyestergewebes:

| | |
|---|---|
| Rohes Polyestergewebe ohne Behandlung (Vergleich) | 1,2 N/mm Trennkraft |
| RFL-gedipptes Polyestergewebe (Vergleich) | 3,7 N/mm Trennkraft |
| Erfindungsgemäßes Polyestergewebe mit Behandlung | 2,4 N/mm Trennkraft |

Das vorstehende Beispiel belegt, dass auch mit dem erfindungsgemäßen Verfahren eine deutliche Verbesserung bei der Haftung zwischen Elastomer und Textilmaterial im Vergleich zum nicht-behandelten Textilmaterial erzielt wird, wenngleich die Verbesserung der Haftung nicht ganz an die des herkömmlichen RFL-Systems herankommt.

### Beispiel 2:

Ein flankenoffener Keilriemen wird mit einem in Trimethylolpropantriacrylat (CAS 15625-89-5) getauchten rohen Polyamidgewebe beschichteten Gewebe gefertigt. Der Riemen zeigt eine Trennfestigkeit (bestimmt nach DIN 53530) des Gewebes von 2,5 N/mm im Vergleich zu 1,9 N/mm bei einem unbeschichteten Gewebe.

### Beispiel 3:

Ein Polyesterfaden wird durch ein Bad mit Trimethylolpropantriacrylat (CAS 15625-89-5) gezogen. Daraus wird ein Keilrippenriemen gefertigt.

Am Artikel zeigt sich eine Ausreißkraft (bestimmt nach ISO 12046) von 20N. Bei Verwendung eines nicht-beschichteten Fadens zur Herstellung des Keilrippenriemens zeigt im Vergleich dazu eine Ausreißkraft (bestimmt nach ISO 12046) von 14N.

### Beispiel 4:

Ein Aramidfaden wird in Trimethylolpropantrimethacrylat (CAS 3290-92-4) getaucht und in kurze Faserstücke (Aramidkurzfasern) zerschnitten. Diese Faserstücke werden in eine peroxidisch vernetzte HNBR-Mischung eingemischt. Nach Vulkanisation ergeben sich die folgenden Werte in Längsrichtung für das mittels des erfindungsgemäßen Verfahrens behandelten Kurzfasern sowie zum Vergleich für die unbehandelten Kurzfasern sowie für mit Esterweichmacher (Ester der Trimellithsäure) behandelte Fasern. Weiterhin wurde zum Vergleich Trimethylolpropantrimethacrylat direkt zur Mischung gegeben, d.h. auch hier wurden die Fasern nicht mit der α-β-ungesättigten Carbonsäure vorab behandelt:

| | |
|---|---|
| Erfindungsgemäße Kurzfasern | Modul 10*: 8,1 MPa |
| Unbehandelte Kurzfasern | Modul 10*: 3,5 MPa |
| Mit Esterweichmacher behandelte Fasern | Modul 10*: 1,8 MPa |
| Unbehandelte Kurzfasern, wobei der Mischung 3% CAS3290-92-4 zugesetzt wurde | Modul 10*: 3,6 MPa |
| Mit RFL behandelte Kurzfasern | Modul 10*: 8,2 MPa |

| | |
|---|---|
| *Modul 10 = Spannungswert bei 10% Dehnung | |

## Patentansprüche

1. Verfahren zum Anhaften eines Textilmaterials an einem Elastomer, wobei das Verfahren die Schritte umfasst:
a) das Vorbehandeln des Textilmaterials mit zumindest einem Mehrfachester einer α-β-ungesättigten Carbonsäure zur Verbesserung der Anhaftung des Textilmaterials an dem Elastomer,
b) das Inkontaktbringen des vorbehandelten Textilmaterials mit einem unvulkanisierten Elastomer, und
c) das Vulkanisieren des erhaltenen Produktes.

2. Verfahren nach Anspruch 1, wobei das Textilmaterial aus der Gruppe, bestehend aus Fasern, Fäden, Flächentextilien und Kombinationen davon, ausgewählt wird.

3. Verfahren nach Anspruch 2, wobei die Flächentextilien aus der Gruppe, bestehend aus Geweben, Gewirken, Gestricken, Nonwovens und Kombinationen davon, ausgewählt wird.

4. Verfahren nach einem der Ansprüche 1 bis 3, wobei das Textilmaterial ein Material umfasst, ausgewählt aus der Gruppe, bestehend aus Polyester, Polyamid, Aramid, Polyurethan, Glas, Kohlenstoff, Viskose und Kombinationen davon.

5. Verfahren nach einem der Ansprüche 1 bis 4, wobei das Textilmaterial aus der Gruppe, bestehend aus Polyestergewebe, Polyamidgewebe, Polyesterfaden, Aramidfaden, Aramidfasern, Glasfasern, Kohlefasern, Viskosefasern und Kombinationen davon, ausgewählt wird.

6. Verfahren nach einem der Ansprüche 1 bis 5, wobei der zumindest eine Mehrfachester einer α-β-ungesättigten Carbonsäure aus der Gruppe, bestehend aus Trimethylolpropantrimethacrylat, Trimethylolpropantriacrylat und Kombinationen davon, ausgewählt wird.

7. Verfahren nach einem der Ansprüche 1 bis 6, wobei das Elastomer eine Kautschukkomponente ist, ausgewählt aus der Gruppe, bestehend aus einem Ethylen-Propylen-Mischpolymerisat (EPM), einem Ethylen-Propylen-Dien-Mischpolymerisat (EPDM), einem (teil)hydrierten Nitrilkautschuk (HNBR), einem Chloropren-Kautschuk (CR), einem Fluor-Kautschuk (FKM), einem Naturkautschuk (NR), einem Styrol-Butadien-Kautschuk (SBR), einem Butadien-Kautschuk (BR) und Kombinationen davon.

8. Verfahren nach einem der Ansprüche 1 bis 7, wobei das mit zumindest einem Mehrfachester einer α-β-ungesättigten Carbonsäure vorbehandelte Textilmaterial vor dem Inkontaktbringen mit dem unvulkanisierten Elastomer in kleinere Teile bzw. Fragmente zerlegt wird und das anschließende Inkontaktbringen mit dem unvulkanisierten Elastomer durch Einmischen in das unvulkanisierte Elastomer erfolgt.

9. Verfahren nach Anspruch 8, wobei das Textilmaterial Aramidkurzfaser ist, der zumindest eine Mehrfachester einer α-β-ungesättigten Carbonsäure Trimethylolpropantrimethacrylat ist und das Elastomer Ethylen-Propylen-Dien-Mischpolymerisat (EPDM) oder ein (teil)hydrierter Nitrilkautschuk (HNBR) ist.

10. Elastomerartikel, erhältlich durch das Verfahren nach einem der Ansprüche 1 bis 9.

11. Elastomerartikel nach Anspruch 10 in der Form eines Bandes, Gurtes, Riemens, Schlauches, Luftfederbalgs, Kompensators oder einer mehrschichtigen Stoffbahn.

12. Elastomerartikel nach Anspruch 11 in der Form eines Antriebsriemens, wobei das Elastomer einen Grundkörper bildet, der eine Decklage als Riemenrücken und einen Unterbau mit einer Kraftübertragungszone umfasst, wobei die Decklage und/oder die Kraftübertragungszone mit der Textilmaterial versehen ist/sind.

13. Elastomerartikel nach Anspruch 12, wobei der Antriebsriemen als Flachriemen, Keilriemen, Keilrippenriemen, Zahnriemen, Kupplungsriemen oder Aufzugsriemen ausgebildet ist.

14. Verwendung eines Mehrfachesters einer α-β-ungesättigten Carbonsäure zur Verbesserung der Anhaftung eines Textilmaterials an einem Elastomer.

## Claims

1. Process for adhering a textile material to an elastomer, the process comprising the steps of:
a) pretreating the textile material with at least one polyester of an α-β-unsaturated carboxylic acid for improving the adhesion of the textile material to the elastomer,
b) contacting the pretreated textile material with an unvulcanized elastomer, and
c) vulcanizing the product obtained.

2. Process according to Claim 1, wherein the textile material is selected from the group consisting of fibers, threads, sheet textiles and combinations thereof.

3. Process according to Claim 2, wherein the sheet textiles are selected from the group consisting of woven fabrics, knitted fabrics, nonwovens and combinations thereof.

4. Process according to any of Claims 1 to 3, wherein the textile material comprises a material selected from the group consisting of polyester, polyamide, aramid, polyurethane, glass, carbon, viscose and combinations thereof.

5. Process according to any of Claims 1 to 4, wherein the textile material is selected from the group consisting of woven polyester fabric, woven polyamide fabric, polyester thread, aramid thread, aramid fibers, glass fibers, carbon fibers, viscose fibers and combinations thereof.

6. Process according to any of Claims 1 to 5, wherein the at least one polyester of an α-ß-unsaturated carboxylic acid is selected from the group consisting of trimethylolpropane trimethacrylate, trimethylolpropane triacrylate and combinations thereof.

7. Process according to any of Claims 1 to 6, wherein the elastomer is a rubber component selected from the group consisting of an ethylene-propylene copolymer (EPM), an ethylene-propylene-diene copolymer (EPDM), a (partially) hydrogenated nitrile rubber (HNBR), a chloroprene rubber (CR), a fluoro rubber (FKM), a natural rubber (NR), a styrene-butadiene rubber (SBR), a butadiene rubber (BR) and combinations thereof.

8. Process according to any of Claims 1 to 7, wherein the textile material that has been pretreated with at least one polyester of an α-ß-unsaturated carboxylic acid is broken down into smaller parts or fragments prior to being contacted with the unvulcanized elastomer and is subsequently contacted with the unvulcanized elastomer by being mixed into the unvulcanized elastomer.

9. Process according to Claim 8, wherein the textile material is short aramid fiber, the at least one polyester of an α-ß-unsaturated carboxylic acid is trimethylolpropane trimethacrylate and the elastomer is ethylene-propylene-diene copolymer (EPDM) or a (partially) hydrogenated nitrile rubber (HNBR).

10. Elastomer article obtainable by the process according to any of Claims 1 to 9.

11. Elastomer article according to Claim 10 in the form of a tape, strap, belt, hose, air spring bellows, expansion joint or a multilayer fabric web.

12. Elastomer article according to Claim 11 in the form of a drive belt, wherein the elastomer forms a main body comprising a top ply as belt backing and a substructure having a power transmission zone, wherein the top ply and/or the power transmission zone has/have been provided with the textile material.

13. Elastomer article according to Claim 12, wherein the drive belt is designed as a flat belt, V-belt, V-ribbed belt, toothed belt, clutch belt or elevator belt.

14. Use of a polyester of an α-ß-unsaturated carboxylic acid for improving the adhesion of a textile material to an elastomer.

## Revendications

1. Procédé destiné à faire adhérer un matériau textile à un élastomère, le procédé comprenant les étapes de :
a) prétraitement du matériau textile par au moins un ester multiple d'un acide carboxylique α-ß-insaturé pour améliorer l'adhérence du matériau textile à l'élastomère,
b) mise en contact du matériau textile prétraité avec un élastomère non vulcanisé et
c) vulcanisation du produit obtenu.

2. Procédé selon la revendication 1, le matériau textile étant choisi dans le groupe constitué par les fibres, les fils, les textiles plats et leurs combinaisons.

3. Procédé selon la revendication 2, les textiles plats étant choisis dans le groupe constitué par les tissus, les tissus à maille, les tricots, les non-tissés et leurs combinaisons.

4. Procédé selon l'une des revendications 1 à 3, le matériau textile comprenant un matériau choisi dans le groupe constitué par le polyester, le polyamide, l'aramide, le polyuréthane, le verre, le carbone, la viscose et leurs combinaisons.

5. Procédé selon l'une des revendications 1 à 4, le matériau textile étant choisi dans le groupe constitué par les tissus de polyester, les tissus de polyamide, les fils de polyester, les fils d'aramide, les fibres d'aramide, les fibres de verre, les fibres de carbone, les fibres de viscose et leurs combinaisons.

6. Procédé selon l'une des revendications 1 à 5, ledit au moins un ester multiple d'un acide carboxylique α-ß-insaturé étant choisi dans le groupe constitué par le triméthacrylate de triméthylolpropane, le triacrylate triméthylolpropane et leurs combinaisons.

7. Procédé selon l'une des revendications 1 à 6, l'élastomère étant un composant de caoutchouc, choisi dans le groupe constitué par un copolymère d'éthylène-propylène (EPM), un copolymère d'éthylène-propylène-diène (EPDM), un caoutchouc de nitrile (partiellement) hydrogéné (HNBR), un caoutchouc de chloroprène (CR), un caoutchouc fluoré (FKM), un caoutchouc naturel (NR), un caoutchouc de styrène-butadiène (SBR), un caoutchouc de butadiène (BR) et leurs combinaisons.

8. Procédé selon l'une des revendications 1 à 7, le matériau textile prétraité par au moins un ester multiple d'un acide carboxylique α-ß-insaturé étant décomposé en plus petits morceaux ou en fragments avant la mise en contact avec l'élastomère non vulcanisé et la mise en contact consécutive avec l'élastomère non vulcanisé étant effectuée par mélange dans l'élastomère non vulcanisé.

9. Procédé selon la revendication 8, le matériau textile étant une fibre courte d'aramide, ledit au moins un ester multiple d'un acide carboxylique α-ß-insaturé étant le triméthacrylate de triméthylolpropane et l'élastomère étant le copolymère d'éthylène-propylène-diène (EPDM) ou un caoutchouc de nitrile (partiellement) hydrogéné (NHBR).

10. Article élastomère pouvant être obtenu par le procédé selon l'une des revendications 1 à 9.

11. Article élastomère selon la revendication 10 sous la forme d'un ruban, d'une ceinture, d'une courroie, d'un tuyau, d'un soufflet de suspension pneumatique, d'un compensateur ou d'un tissu multicouche.

12. Article élastomère selon la revendication 11 sous la forme d'une courroie d'entraînement, l'élastomère formant un corps de base qui comprend une couche de recouvrement en tant que face arrière de courroie et un support présentant une zone de transmission de force, la couche de recouvrement et/ou la zone de transmission de force étant pourvue(s) du revêtement textile.

13. Article élastomère selon la revendication 12, la courroie d'entraînement étant conçue sous forme de courroie plane, de courroie trapézoïdale, de courroie striée, de courroie dentée, de courroie d'accouplement ou de courroie élévatrice.

14. Utilisation d'un ester multiple d'un acide carboxylique a-ß-insaturé pour améliorer l'adhérence d'un matériau textile à un élastomère.
